# EUROPEAN PATENT APPLICATION

(11) **EP 2 916 277 A1**
(43) Date of publication of application: **09.09.2015**
(21) Application number: 15157716.0
(22) Date of filing: 05.03.2015
(51) Int. Cl.: G06Q 10/10

(54) **Terminal device, server, and method of providing messaging service**

(30) Priority: 06.03.2014 KR 20140026324
(71) Applicant: Samsung Electronics Co., Ltd, Gyeonggi-do 443-742 (KR)
(72) Inventor: Park, Yong Seok, 448-991 Gyeonggi-do (KR); Jung, Hyo Jin, 446-783 Gyeonggi-do (KR); Lee, Jae Young, 152-050 Seoul (KR)
(74) Representative: Nederlandsch Octrooibureau

(57) **Abstract**

A terminal device is provided. The terminal device includes an input unit configured to receive an input of a user command inviting a non-subscriber of a messaging service to join a messaging group, and a communication unit configured to transmit a request for invitation information to a server, when the invitation information is received from the server, to transmit an invitation message including the invitation information and an application installation Uniform Resource Locator (URL) to a non-subscriber terminal, and when a join result of the non-subscriber joining the messaging service is received, to transmit a request for an invitation of the non-subscriber to the messaging group.

## Description

### TECHNICAL FIELD

The present disclosure relates to a terminal device, a server, and a metho d of providing a messaging service in which a user may be invited to join a messaging group.

### BACKGROUND

With recent developments in electronic technology and communication networks, various apparatuses and methods for communication between users have bee n developed. Thus, users may communicate with other users through various methods, such as electronic mail, wireless telephones, instant messaging, internet chatting, video calls, and the like as well as wired telephones.

In particular, instant messaging service is widely used because it enables users to send messages whenever the users want without limitations in terms of time an d place and to freely communicate with other users.

The above-described instant messaging service allows users who have jo ined the messaging service to form a messaging group, to communicate with other user s in the messaging group, and to send/receive various data, such as photographs, movin g pictures, documents, and the like.

However, since the messaging service provides such a service on the pre mise that a user has joined the messaging service, a user who has not joined the service may not use the messaging service. Therefore, there is no way for the user who has joi ned the messaging service to invite a user who has not joined the messaging service.

The above information is presented as background information only to a ssist with an understanding of the present disclosure. No determination has been made, and no assertion is made, as to whether any of the above might be applicable as prior ar t with regard to the present disclosure.

### SUMMARY

Aspects of the present disclosure are to address at least the above-mentio ned problems and/or disadvantages and to provide at least the advantages described bel ow. Accordingly, an aspect of the present disclosure is to provide a terminal device, a s erver, and a method of providing a messaging service by which a user who does not joi n a messaging service may be allowed to join the messaging service and automatically i nvited to the messaging service.

In accordance with an aspect of the present disclosure, a terminal device is provided. The terminal device includes an input unit configured to receive an input of a user command inviting a non-subscriber of a messaging service to join a messaging g roup, and a communication unit configured to transmit a request for invitation informati on to a server, when the invitation information is received from the server, to transmit a n invitation message including the invitation information and an application installation Uniform Resource Locator (URL) to a non-subscriber terminal, and when a join result of the non-subscriber joining the messaging service is received, to transmit a request fo r an invitation of the non-subscriber to the messaging group.

In accordance with another aspect of the present disclosure, a server is p rovided. The server includes an invitation information creating unit configured to creat invitation information when invitation information is requested from an inviter terminal , a communication unit configured to transmit the created invitation information to the i nviter terminal and to transmit a join result of a non-subscriber joining a messaging ser vice to the inviter terminal, a membership managing unit configured to, when a join req uest including the invitation information and non-subscriber information is received fro m a non-subscriber terminal device, let the non-subscriber join the messaging group, an d a group managing unit configured to, when a request inviting the non-subscriber to th e messaging group is received from the inviter terminal, add the non-subscriber to join a messaging group.

In accordance with another aspect of the present disclosure, a method of providing, by a terminal device, a messaging service is provided. The method includes receiving, by the terminal device, an input of a user command inviting a non-subscriber of the messaging service to join a messaging group, transmitting a request for invitatio n information to a server, when the invitation information is received from the server, tr ansmitting an invitation message including the invitation information and an applicatio n installation URL to a non-subscriber terminal, and when a join result of the non-subsc riber joining the messaging service is received from the server, transmitting a request fo r an invitation of the non-subscriber to the messaging group.

In accordance with another aspect of the present disclosure, a method of providing, by a server, a messaging service is provided. The method includes creating i nvitation information when invitation information is requested from an inviter terminal, transmitting the created invitation information to the inviter terminal, when a join requ est including the invitation information and non-subscriber information is received fro m a non-subscriber terminal, letting the non-subscriber join the messaging service, tran smitting a join result of the non-subscriber joinng the messaging service to the inviter te rminal, and when a request inviting the non-subscriber to join a messaging group is rec eived from the inviter terminal, adding the non-subscriber to the messaging group.

In accordance with another aspect of the present disclosure, a method of providing, by a messaging system, a messaging service is provided. The method includ es when a user command by which an inviter terminal invites a non-subscriber of the m essaging service to join a messaging group is inputted, transmitting a request for invitat ion information to a server, creating, by the server, invitation information and transmitti ng the created invitation information to the inviter terminal, transmitting, by the inviter terminal, an invitation message including the invitation information and an application i nstallation URL to a non-subscriber terminal, transmitting, by the non-subscriber termi nal, a join request including the invitation information and non-subscriber information t hrough the URL, letting, by the server, the non-subscriber join the messaging service a nd transmitting a join result to the inviter terminal, requesting, by the inviter terminal, a n invitation of the non-subscriber to the messaging group, and adding, by the server, the non-subscriber to the messaging group.

Other aspects, advantages, and salient features of the disclosure will bec ome apparent to those skilled in the art from the following detailed description, which, t aken in conjunction with the annexed drawings, discloses various embodiments of the p resent disclosure.

### BRIEF DESCRIPTION OF THE DRAWINGS

The above and other aspects, features, and advantages of certain embodi ments of the present disclosure will be more apparent from the following description ta ken in conjunction with the accompanying drawings, in which:
FIG. 1 is a block diagram showing a configuration of a messaging syste m according to an embodiment of the present disclosure;
FIG. 2 is a flow chart showing a method of providing a messaging servic e in a messaging system according to an embodiment of the present disclosure.
FIG. 3 is a block diagram showing a configuration of an inviter terminal device according to an embodiment of the present disclosure;
FIG. 4 is a block diagram showing a configuration of a non-subscriber te rminal device according to an embodiment of the present disclosure;
FIG. 5 is a block diagram showing a configuration of a server according to an embodiment of the present disclosure;
FIGS. 6A, 6B, 6C, 6D, 6E, and 6F are views showing a display screen p rovided by an inviter terminal device or a non-subscriber terminal device according to v arious embodiments of the present disclosure;
FIG. 7 is a flow chart showing a method of providing a messaging servic e in an inviter terminal device according to an embodiment of the present disclosure; an d
FIG. 8 is a flow chart showing a method of providing a messaging servic e in a server according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the p resent disclosure as defined by the claims and their equivalents. It includes various spec ific details to assist in that understanding but these are to be regarded as merely exempl ary. Accordingly, those of ordinary skill in the art will recognize that various changes a nd modifications, of the various embodiments described herein can be made without de parting from the scope and spirit of the present disclosure. In addition, descriptions of well-known functions and constructions may be omitted for clarity and conciseness.

The terms and words used in the following description and claims are no t limited to the bibliographical meanings, but, are merely used by the inventor to enable a clear and consistent understanding of the present disclosure. Accordingly, it should b e apparent to those skilled in the art that the following description of various embodime nts of the present disclosure is provided for illustration purpose only and not for the pur pose of limiting the present disclosure as defined by the appended claims and their equi valents.

It is to be understood that the singular forms "a," "an," and "the" include plural referents unless the context clearly dictates otherwise. Thus, for example, refere nce to "a component surface" includes reference to one or more of such surfaces.

The expression "include" or "may include" that may be used in describi ng the various embodiments of the present disclosure indicates the presence of a disclos ed corresponding function, operation or component but does not exclude one or more f unctions, operations or components in addition. Furthermore, in describing the various embodiments of the present disclosure, it should be understood that the term "includes" or "has" indicates the presence of characteristics, numbers, steps, operations, compone nts, parts or combinations thereof represented in the present disclosure but does not exc lude the presence or addition of one or more other characteristics, numbers, steps, opera tions, components, parts or combinations thereof.

The expression "or" in the various embodiments of the present disclosur e includes any and all combinations of enumerated words. For example, the expression "A or B" may include A, B, or both A and B.

The expression "a first", "a second", "firstly", or "secondly" in the vario us embodiments of the present disclosure may modify various components of the vario us embodiments but does not limit corresponding components. For example, the expre ssions above do not limit the order and/or importance of corresponding components. T he expressions above may be used to distinguish one component from another compone nt. For example, both a first user device and a second user device are user devices that are mutually different user devices. For example, without departing from the scope of r ights of the various embodiments of the present disclosure, a first component may be ca lled a second component and similarly, the second component may also be called the fir st component.

When any component is referred to as being "connected" or "accessed" t o another component, it should be understood that the former can be "directly connecte d" to the latter, or there may be another component in between. On the contrary, when any component is referred to as being "directly connected" or "directly accessed" to an other component, it should be understood that there may be no other component in bet ween.

The terms used in describing the various embodiments of the present dis closure are used only to describe specific various embodiments and are not intended to limit the present disclosure. The terms in singular form may include the plural forms u nless otherwise specified.

Unless otherwise defined herein, all terms used herein including technic al or scientific terms have the same meanings as those generally understood by a person skilled in the art.

Terms defined in generally used dictionaries should be construed to hav e meanings matching contextual meanings in the related art and should not be construe d as having an ideal or excessively formal meaning unless otherwise defined herein.

An electronic device (e.g., terminal device or server) according to variou s embodiments of the present disclosure may be a device that includes a communicatio n function. For example, the electronic device may include at least one of a smart phon e, a tablet Personal Computer (PC), a mobile phone, a video phone, an e-book reader, a desktop PC, a laptop PC, a net book computer, a Personal Digital Assistant (PDA), a Po rtable Multimedia Player (PMP), an MP3 player, a mobile medical device, a camera, an d a wearable device (e.g., a Head-Mounted-Device (HMD) such as electronic glasses, e lectronic clothing, an electronic bracelet, an electronic necklace, an electronic accessor y, an electronic tattoo, or a smart watch).

According to various embodiments, the electronic device may be a smart home appliance having a communication function. The smart home appliance may inc lude, for example, at least one of a Television (TV) set, a Digital Video Disk (DVD) pl ayer, an audio set, a refrigerator, an air conditioner, a cleaner, an oven, a microwave ov en, a washing machine, an air cleaner, a set-top box, a TV box (e.g., Samsung HomeSy ncTM, Apple TV™, or Google TV™), a game console, an electronic dictionary, an ele ctronic key, a camcorder, and an electronic frame.

According to various embodiments, the electronic device may include at least one of various medical devices (e.g., a Magnetic Resonance Angiography (MRA) device, a Magnetic Resonance Imaging (MRI) device, a Computed Tomography (CT) device, a camera, and an ultrasonicator), a navigation device, a Global Positioning Syst em (GPS) receiver, an Event Data Recorder (EDR), a Flight Data Recorder (FDR), a ca r infotainment device, electronic equipment for a ship (e.g., a navigation device for a sh ip or a gyro compass), avionics, a security device, a head unit for a car, an industrial or home robot, a financial institution's Automated Teller's Machine (ATM) or a store's po int of sale (POS) system.

According to various embodiments, the electronic device may include at least one of a portion of a building/ structure or furniture including a communication fu nction, an electronic board, an electronic signature receiving device, a projector, and va rious measurement devices (e.g., water, electricity, gas and electric wave measurement devices). An electronic device according to various embodiments of the present disclos ure may be one or more combinations of the above-described various devices. Moreov er, an electronic device according to various embodiments of the present disclosure ma y be a flexible device. Moreover, it is obvious to a person skilled in the art that an elect ronic device according to various embodiments of the present disclosure is not limited t o the above-described devices.

Electronic devices according to various embodiments are described belo w with reference to the accompanying drawings. The term "user" used in various embo diments may refer to a person who uses an electronic device, or a device (e.g., an electr onic device having artificial intelligence) that uses an electronic device.

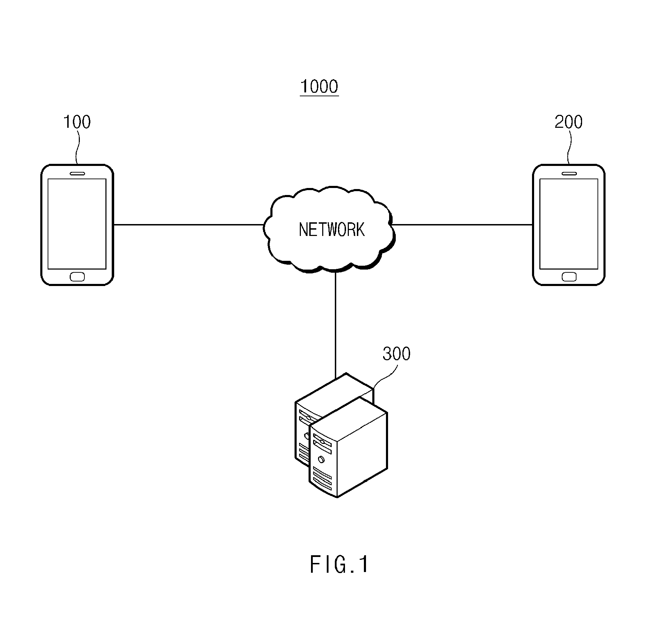

FIGS. 1 through 8, discussed below, and the various embodiments used t o describe the principles of the present disclosure in this patent document are by way of illustration only and should not be construed in any way that would limit the scope of t he disclosure. Those skilled in the art will understand that the principles of the present disclosure may be implemented in any suitably arranged communications system. The t erms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a block diagram showing a configuration of a messaging syste m according to an embodiment of the present disclosure.

Referring to FIG. 1, a messaging system 1000, which may include an in viter terminal device (or first terminal device) 100, a non-subscriber terminal device (or second terminal device) 200, and a server 300, is illustrated.

According to an embodiment, the inviter terminal device 100, the non-su bscriber terminal device 200, and the server 300 may be connected to one another throu gh a network. For example, the inviter terminal device 100, the non-subscriber termina l device 200, and the server 300 may be connected to one another through a wired/wirel ess internet network that uses a Transmission Control Protocol/Internet Protocol (TCP/I P) to link devices worldwide. In another example, the inviter terminal device 100, the non-subscriber terminal device 200, and the server 300 may be connected to one anothe r through a mobile communication network, such as Code Division Multiple Access (C DMA) network, a Wideband Code Division Multiple Access (WCDMA) network, a Lo ng Term Evolution (LTE) network, or the like.

The inviter terminal device 100 may correspond to a terminal device of a first user who has joined a messaging service and uses the messaging service. The no n-subscriber terminal device 200 may correspond to a terminal device of a second user who does not join the messaging service. According to an embodiment of the present d isclosure, the first user may invite a user who does not join the messaging service.

The inviter terminal device 100 may receive an input of a user command inviting a non-subscriber of the messaging service from a user thereof. According to a n embodiment, the inviter terminal device 100 displays a list including subscribers and non-subscribers of the messaging service. The user may select at least one of the non-s ubscribers included in the list.

According to an embodiment, when a user command inviting a non-subs criber of the messaging service to the messaging group is inputted, the inviter terminal device 100 may transmit a request for invitation information to the server 300. Accordi ng to an embodiment, the inviter terminal device 100 may transmit inviter information and non-subscriber information together when requesting the invitation information. F or example, the inviter information may be an inviter's messaging service ID or Mobile Station Internal ISDN number (MSISDN), and the non-subscriber information may be MSISDN. According to an embodiment, when invitation information (e.g., a token cor responding to inherent identification information that may be connected to a chatting ro om (or messaging group) designated by the inviter terminal device 100) is received fro m the server 300, the inviter terminal device 100 may transmit an invitation message to the non-subscriber terminal device 200. According to an embodiment, the invitation m essage may include invitation information and an application installation Uniform Reso urce Locator (URL). The inviter terminal device 100 may store the application installat ion URL in advance, or may receive the application installation URL together with the i nvitation information from the server 300. According to an embodiment, the inviter ter minal device 100 may transmit the invitation message by using a messaging service diff erent from the messaging service according to an embodiment of the present disclosure. For example, the inviter terminal device 100 may transmit an invitation message to th e non-subscriber terminal device 200 by using a Short Message Service (SMS).

According to an embodiment, when a join result of the non-subscriber fo r the messaging service is received from the server 300, the inviter terminal device 100 may transmit a request for an invitation of the non-subscriber to the messaging group to the server 300. According to an embodiment, the inviter terminal device 100 may requ est the invitation of the non-subscriber by using the messaging group information and a messaging service ID or MSISDN of the non-subscriber. The messaging group inform ation indicates information capable of identifying a specific messaging group.

As described above, the inviter terminal device 100 may transmit invitati on information related to joining of a specific messaging service based on communicati on connection information (e.g., phone number of the non-subscriber terminal device 2 00, E-mail information of the non-subscriber terminal device 200, etc.) related to at leas t one stored non-subscriber terminal device 200. According to an embodiment, the invi tation terminal device 100 may classify the communication connection information into communication connection information of specific messaging service subscribers and communication connection information of non-subscribers based on a list of subscriber s provided by the specific messaging service. The inviter terminal device 100 may pro vide the communication connection information through an execution screen of the spe cific messaging service or a separate non-subscriber search screen. Alternatively, accor ding to an embodiment, the inviter terminal device 100 may output a list related to the c ommunication connection information of non-subscribers in a specific chatting room pr ovided by the specific messaging service. In relation to this, the inviter terminal device 100 may provide a menu or icon capable of outputting a list including items related to t he communication connection information of non-subscribers.

When at least one of the communication connection information is relate d to the specific messaging service non-subscribers, the inviter terminal device 100 ma y transmit the selected communication connection information and the inviter informati on to the server 300. When an invitation message created based on the communication connection information and the inviter information is received, the inviter terminal devi ce 100 may transmit the invitation message to the non-subscriber terminal device 200. Herein, when a plurality of non-subscribers communication connection information is s elected from the list, the inviter terminal device 100 may transmit an invitation message related to joining of the specific messaging service or requesting a participation in the chatting room for the specific messaging service to the respective non-subscriber termi nal devices 200.

When the invitation message is received from the inviter terminal device 100, the non-subscriber terminal device 200 may send the server 300 a request for joini ng the messaging service. According to an embodiment, the non-subscriber terminal de vice 200 may display the invitation message on a screen thereof. The invitation messag e displayed on the screen may include an invitation phrase (e.g., "Your friend invites yo u to the messaging service"), and an application installation URL (including a token co nnectable to a specific messaging service-related chatting room (or messaging group) o pened or maintained by the inviter terminal device 100). According to an embodiment, the non-subscriber terminal device 200 may receive an input of a user command for sel ecting a URL from a user. When the user command for selecting a URL is inputted, th e non-subscriber terminal device 200 may access to the selected URL to install an appli cation providing the messaging service. When the application is installed, the non-subs criber terminal device 200 may transmit the server 300 a request for joining the messag ing service according to the user command. According to an embodiment, the join requ est may include invitation information and non-subscriber information. According to a n embodiment, in a case where an application is installed in the non-subscriber terminal device 200, a process of installing the application may be omitted. In the course of exe cuting the messaging application, a token value (or invitation information) extracted fro m the invitation message may be transferred to the messaging application in the form of a parameter. After the installation of the messaging application and the join process ar e completed, the messaging application transfers the token transferred in the course of e xecution thereof and inherent information of the non-subscriber terminal device 200 to the server 300 to perform authentication, and when the authentication is completed, the messaging application may send the authenticated information to the inviter terminal de vice 100. In response to this, the inviter terminal device 100 may confirm that the invit ation message has been sent based on the received subscriber information, and may invi te the corresponding subscriber to a group room for participation.

When invitation information is requested from the inviter terminal devic e 100, the server 300 may create the invitation information. The invitation information may include inherent identification information by which it may be identified that an in viter has invited a non-subscriber to the messaging group. Whenever the invitation info rmation is requested, the server 300 may create inherent invitation information (for eac h chatting room or for each non-subscriber). According to an embodiment, the server 3 00 may store the invitation information in combination with subscriber information and non-subscriber information received from the inviter terminal device 100. According t o an embodiment, the server 300 may store invitation information, subscriber informati on, non-subscriber information and messaging group information in relation to one anot her.

According to an embodiment, when invitation information is created, the server 300 may transmit the created invitation information to the inviter terminal devic e 100. According to an embodiment, the server 300 may transmit an application install ation URL together with the invitation information.

When a join request is received from the non-subscriber terminal device 200, the server 300 may let the non-subscriber join the messaging service. According t o an embodiment, when the non-subscriber joins the messaging service, the server 300 may store a messaging service ID of the non-subscriber.

When the non-subscriber joins the messaging service, the server 300 ma y transmit a join result to the inviter terminal device 100. According to an embodiment , the server 300 may identify the inviter by using the invitation information received tog ether with the join request from the non-subscriber terminal device 200, and may trans mit the join result to the identified inviter. According to an embodiment, when transmit ting the join result, the server 300 may transmit the messaging service ID given accordi ng to the joining of the non-subscriber.

When a request inviting the non-subscriber to the messaging is received from the inviter terminal device 100, the server 300 may add the non-subscriber to the messaging group.

The above embodiment describes that when a non-subscriber joins the m essaging service, the server 300 transmits a join result to the inviter terminal device 100 . However, according to an embodiment, in a case where the server 300 stores the invit ation information, the subscriber information, the non-subscriber information and the m essaging group information in relation to one another, the server 300 may not transmit t he join result to the inviter terminal device 100. According to an embodiment, in a case where the server 300 stores the invitation information, the subscriber information, the non-subscriber information and the messaging group information in relation to one anot her, when a non-subscriber joins the messaging service, the server 300 may add the non -subscriber to the messaging group using the invitation information, the subscriber info rmation, the non-subscriber information and the messaging group information.

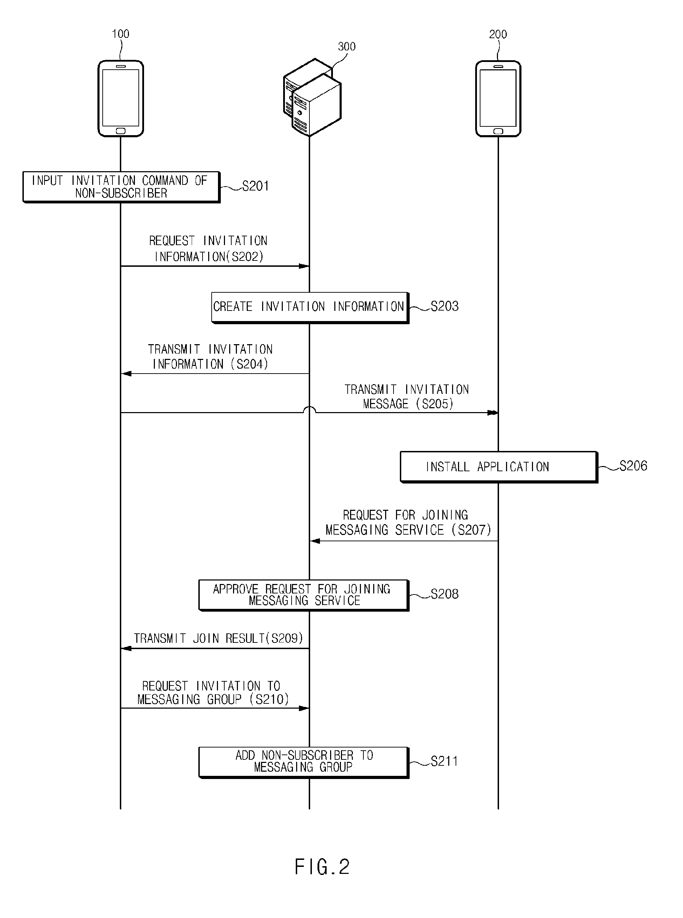

FIG. 2 is a flow chart showing a method of providing a messaging servic e in a messaging system according to an embodiment of the present disclosure.

Referring to FIG. 2, the inviter terminal device 100, which may receive an invitation command of a non-subscriber from a user thereof at operation S201, is illu strated. According to an embodiment, the inviter terminal device 100 may display a list including subscribers and non-subscribers of the messaging service. The user may invi te the non-subscriber to the messaging group by selecting at least one of the non-subscr ibers included in the list. In relation to this, the inviter terminal device 100 may output the list related to the communication connection information of the non-subscriber of th e specific messaging service on an execution screen of the specific messaging service o r a screen of a chatting room executed in the specific messaging service. The inviter ter minal device 100 may provide a menu or icon related to the output of the list. When th e menu or icon is selected, the inviter terminal device 100 may compare the stored com munication connection information with communication connection information joinin g the specific messaging service to extract the information of the non-subscriber termin al devices 200 which do not join the specific messaging service. The inviter terminal d evice 100 may configure the list based on the extracted information of the non-subscrib er terminal devices 200.

When an invitation command of a non-subscriber is inputted, the inviter terminal device 100 may transmit a request for invitation information to the server 300 at operation S202. According to an embodiment, the inviter terminal device 100 may tr ansmit inviter information and non-subscriber information together when requesting the invitation information. For example, the inviter information may be an inviter's messa ging service ID or MSISDN, and the non-subscriber information may be MSISDN.

When the invitation information is requested from the inviter terminal d evice 100, the server 300 may create the invitation information at operation S203. The invitation information indicates inherent identification information (e.g., Token) capabl e of identifying that the inviter has invited the non-subscriber to the specific messaging group. Whenever the invitation information is requested, the server 300 may create inh erent invitation information. According to an embodiment, the server 300 may store th e invitation information in relation to the subscriber information and non-subscriber inf ormation received from the inviter terminal device 100. According to an embodiment, t he server 300 may store invitation information, subscriber information, non-subscriber i nformation and messaging group information in relation to one another.

When the invitation information is created, the server 300 may transmit t he created invitation information to the inviter terminal device 100 at operation S204. According to an embodiment, the server 300 may transmit an application installation U RL together with the invitation information.

When invitation information is received from the server 300, the inviter terminal device 100 may transmit an invitation message to the non-subscriber terminal device 200 at operation S205. According to an embodiment, the invitation message ma y include invitation information and an application installation URL. The inviter termi nal device 100 may store the application installation URL in advance, or may receive th e application installation URL together with the invitation information from the server 300. According to an embodiment, the inviter terminal device 100 may transmit the in vitation message by using a messaging service different from the messaging service acc ording to an embodiment of the present disclosure. For example, the inviter terminal d evice 100 may transmit an invitation message to the non-subscriber terminal device 200 by using a SMS.

When the invitation message is received from the inviter terminal device 100, the non-subscriber terminal device 200 may install an application providing the m essaging service at operation S206. According to an embodiment, the non-subscriber te rminal device 200 may display the invitation message on a screen thereof. The invitati on message displayed on the screen may include an invitation phrase (e.g., "Your frien d invites you to the messaging service"), and an application installation URL. Accordi ng to an embodiment, the non-subscriber terminal device 200 may receive an input of a user command for selecting a URL from a user thereof. When the user command for s electing a URL is inputted, the non-subscriber terminal device 200 may access to the se lected URL to install an application providing the messaging service.

According to an embodiment, when the application has been installed in the non-subscriber terminal device 200, the installation operation of the application ma y be omitted.

When the application is installed, the non-subscriber terminal device 20 0 may send the server 300 a request for joining the messaging service at operation S207 . According to an embodiment, the join request may include invitation information and non-subscriber information.

When the request for joining the messaging service (i.e., a join request) i s received from the non-subscriber terminal device 200, the server 300 may approve the join request at operation S208. According to an embodiment, when the non-subscriber joins the messaging service, the server 300 may store the messaging service ID of the n on-subscriber.

When the non-subscriber joins the messaging service, the server 300 ma y transmit a join result to the inviter terminal device 100 at operation S209. According to an embodiment, the server 300 may identify the inviter by using the invitation infor mation received together with the join request from the non-subscriber terminal device 200, and may transmit the join result to the identified inviter. According to an embodi ment, when transmitting the join result, the server 300 may transmit the messaging serv ice ID of the non-subscriber together.

When the messaging service join result of the non-subscriber is received from the server 300, the inviter terminal device 100 may transmit a request for an invit ation of the non-subscriber to the messaging group to the server 300 at operation S210. According to an embodiment, the inviter terminal device 100 may request the invitatio n of the non-subscriber by using the messaging group information and a messaging serv ice ID or MSISDN of the non-subscriber.

When the request inviting the non-subscriber to the messaging group is r eceived from the inviter terminal device 100, the server 300 may add the non-subscribe r to the messaging group at operation S211.

The above embodiment describes that when a non-subscriber joins the m essaging service, the server 300 transmits a join result to the inviter terminal device 100 . However, according to an embodiment, in a case where the server 300 stores the invit ation information, the subscriber information, the non-subscriber information and the m essaging group information in relation to one another, the server 300 may not transmit t he join result to the inviter terminal device 100. According to an embodiment, in a case where the server 300 stores the invitation information, the subscriber information, the non-subscriber information and the messaging group information in relation to one anot her, when a non-subscriber joins the messaging service, the server 300 may add the non -subscriber to the messaging group using the invitation information, the subscriber info rmation, the non-subscriber information and the messaging group information.

A method of providing a messaging service at a messaging system accor ding to various embodiments of the present disclosure may include: when a user comm and inviting a non-subscriber of the messaging service to join a messaging group is inp utted, requesting, by an inviter terminal, invitation information to a server, creating, by the server, invitation information and transmitting the created invitation information to the inviter terminal, transmitting, by the inviter terminal, an invitation message includin g the invitation information and an application installation URL to a non-subscriber ter minal device, transmitting, by the non-subscriber terminal device, a join request includi ng the invitation information and non-subscriber information through the URL, letting, by the server, the non-subscriber join the messaging service and transmitting a join resu It to the inviter terminal, requesting, by the inviter terminal, an invitation of the non-sub scriber to the messaging group to the server, and adding, by the server, the non-subscrib er to the messaging group.

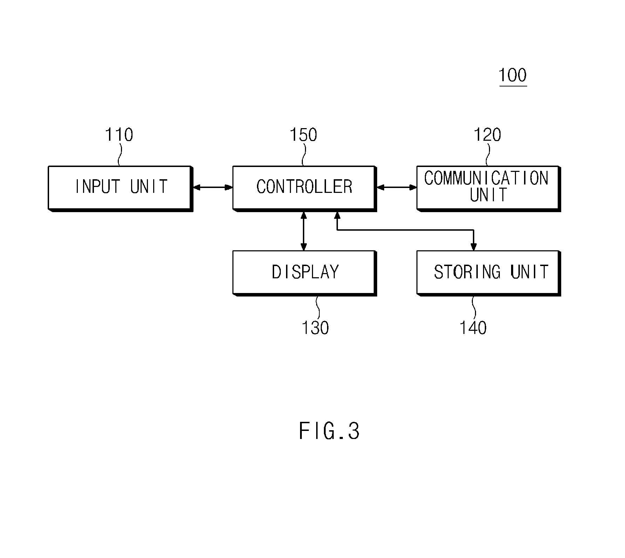

FIG. 3 is a block diagram showing a configuration of an inviter terminal apparatus according to an embodiment of the present disclosure.

Referring to FIG. 3, an inviter terminal device 100, which may include a n input unit 110, a communication unit 120, a display 130, a storing unit 140, and a con troller 150, is illustrated.

The input unit 110 may receive an input of a user command. According to an embodiment, the input unit 110 may receive an input of a user command inviting a non-subscriber of the messaging service from a user.

According to an embodiment, the input unit 110 may be implemented by a touch screen or touch pad operated by a user's touch input.

The communication unit 120 may communicate with the non-subscriber terminal device 200 or the server 300. According to an embodiment, when a user com mand inviting a non-subscriber of the messaging service to the messaging group is inpu tted, the communication unit 120 may transmit a request for invitation information to th e server 300. According to an embodiment, the communication unit 120 may transmit i nviter information and non-subscriber information together when requesting the invitati on information. For example, the inviter information may be an inviter's messaging ser vice ID or MSISDN, and the non-subscriber information may be MSISDN.

According to an embodiment, when the invitation information is receive d from the server 300, the communication unit 120 may transmit an invitation message to the non-subscriber terminal device 200. According to an embodiment, the invitation message may include invitation information and an application installation URL. Acco rding to an embodiment, the communication unit 120 may transmit the invitation messa ge by using a messaging service different from the messaging service according to an e mbodiment of the present disclosure. For example, the communication unit 120 may tr ansmit an invitation message to the non-subscriber terminal device 200 by using SMS.

According to an embodiment, when a join result of a non-subscriber for the messaging service is received from the server 300, the communication unit 120 may transmit a request for an invitation of the non-subscriber to the messaging group to the server 300. According to an embodiment, the inviter terminal device 100 may request t he invitation of the non-subscriber by using the messaging group information and a mes saging service ID or MSISDN of the non-subscriber.

The display 130 may display a list including subscribers and non-subscri bers of the messaging service according to a user command. The user may invite the n on-subscriber to the messaging group by selecting at least one of the non-subscribers in eluded in the list.

The storing unit 140 may store inviter information or non-subscriber inf ormation. For example, the storing unit 140 may store communication connection infor mation related to at least one terminal device. Herein, the communication connection i nformation may be stored to be classified into terminals devices which have joined a sp ecific messaging service and terminals devices which do not join the specific messagin g service. According to an embodiment, the storing unit 140 may store an application i nstallation URL.

The controller 150 may control overall operations of the inviter terminal device 100. According to an embodiment, the controller 150 may control each of the in put unit 110, the communication unit 120, the display 130 and the storing unit 140 such that the inviter terminal device 100 invites a non-subscriber of the messaging service a nd adds the non-subscriber to the messaging group.

The inviter terminal device 100 according to various embodiments of th e present disclosure may include an input unit 110 configured to receive an input of a u ser command inviting a non-subscriber of a messaging service to join a messaging grou p, and a communication unit 120 configured to transmit a request for invitation informa tion to a server 300, when invitation information is received from the server 300, trans mitting an invitation message including the invitation information and an application in stallation URL to a non-subscriber terminal device 200, and when a result of the non-su bscriber joining the messaging service is received, transmitting a request for an invitati on of the non-subscriber to the messaging group.

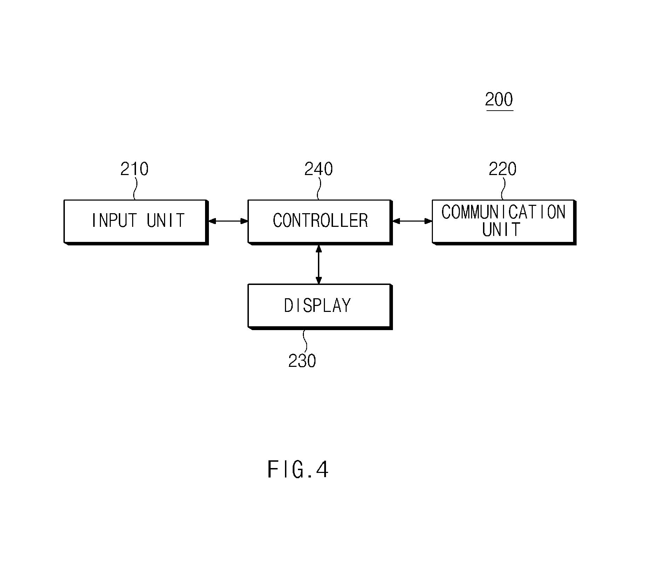

FIG. 4 is a block diagram showing a configuration of a non-subscriber te rminal device according to an embodiment of the present disclosure.

Referring to FIG. 4, a non-subscriber terminal device 200, which may in clude an input unit 210, a communication unit 220, and a controller 240, is illustrated.

The input unit 210 may receive an input of a user command. According to an embodiment, the input unit 210 may receive an input of a user command for selec ting an application installation URL. For example, a user may input a user command se lecting an application installation URL displayed on a display 230.

According to an embodiment, the input unit 210 may be implemented by a touch screen or touch pad operated by a user's touch input.

The communication unit 220 may communicate with the inviter terminal device 100 or the server 300. According to an embodiment, the communication unit 2 20 may receive an invitation message from the inviter terminal device 100.

The display 230 may display the invitation message received from the in viter terminal device 100. According to an embodiment, the display 230 may display t he application installation URL included in the invitation message.

The controller 240 may control overall operations of the non-subscriber terminal device 200. According to an embodiment, the controller 240 may control each of the input unit 210, the communication unit 220, and the display 230 such that the no n-subscriber terminal device 200 joins the messaging service or the messaging group.

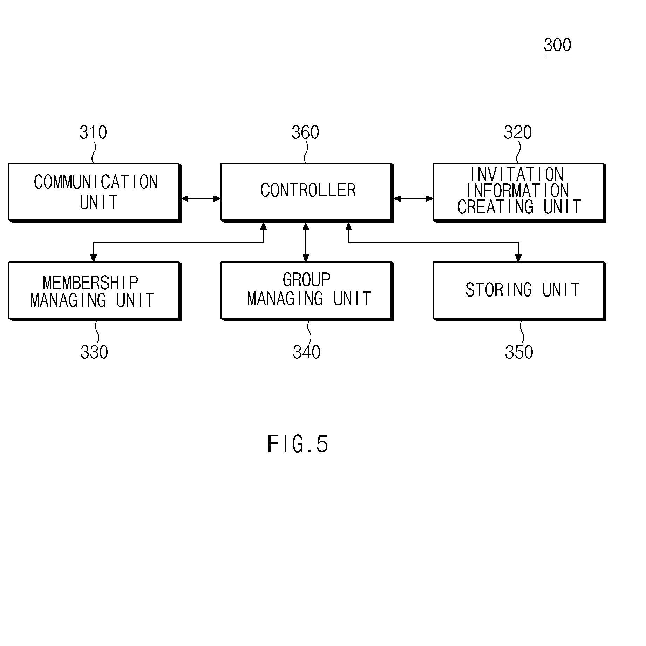

FIG. 5 is a block diagram showing a configuration of a server according to an embodiment of the present disclosure.

Referring to FIG. 5, a server 300, which may include a communication u nit 310, an invitation information creating unit 320, a membership managing unit 330, a group managing unit 340, a storing unit 350, and a controller 360, is illustrated.

The communication unit 310 may communicate with the terminal device 100 and the server 300. According to an embodiment, the communication unit 310 ma y transmit invitation information to the inviter terminal device 100. According to an e mbodiment, the communication unit 310 may transmit an application installation URL t ogether with the invitation information.

When the non-subscriber joins the messaging service, the communicatio n unit 310 may transmit a join result to the inviter terminal device 100. According to a n embodiment, when transmitting the join result, the communication unit 310 may trans mit a messaging service ID of the non-subscriber, which is given by the joining of the n on-subscriber, together.

According to an embodiment, in a case where the storing unit 350 stores the invitation information, the subscriber information, the non-subscriber information, and the messaging group information in relation to one another, the communication uni t 310 may not transmit the join result to the inviter terminal device 100.

The invitation information creating unit 320 may create invitation infor mation. According to an embodiment, when invitation information is requested from th e inviter terminal device 100, the invitation information creating unit 320 may create in vitation information. The invitation information may include inherent identification inf ormation by which it may be identified that an inviter has invited a non-subscriber to th e messaging group. Whenever the invitation information is requested, the invitation inf ormation creating unit 320 may create inherent invitation information.

The membership managing unit 330 may manage messaging service sub scribers. According to an embodiment, the membership managing unit 330 may manag e messaging service subscribers by using messaging service subscriber information (e.g ., ID or MSISDN) stored in the storing unit 350. According to an embodiment, when a join request is received from the non-subscriber terminal device 200, the membership managing unit 330 may let the non-subscriber join the messaging service through an au thentication process.

The group managing unit 340 may manage a messaging group. The mes saging group indicates a single group in which a plurality of users send or receive conte nts. According to an embodiment, the group managing unit 340 may manage a messagi ng group by using messaging group information stored in the storing unit 350. For exa mple, when a new user is added to join a messaging group or a subscriber withdraws fr om the messaging group, it is possible to update the participants in the messaging group . In another example, when a participant included in the messaging group inputs a mes sage, the group managing unit 340 may identify another participant such that the input message may be transmitted to the identified another participant.

According to an embodiment, when a request inviting a non-subscriber t o join a messaging group is received from the inviter terminal device 100, the group ma naging unit 340 may add the non-subscriber to the messaging group. According to an e mbodiment, in a case where the storing unit 350 stores the invitation information, the s ubscriber information, the non-subscriber information and the messaging group inform ation in relation to one another, when a non-subscriber joins the messaging service, the group managing unit 340 may add the non-subscriber to the messaging group using the invitation information, the subscriber information, the non-subscriber information and t he messaging group information.

The storing unit 350 may store the invitation information created by the invitation information creating unit 320. According to an embodiment, the storing unit 350 may store the invitation information, inviter information, and non-subscriber infor mation in relation to one another. According to an embodiment, the server 300 may sto re invitation information, subscriber information, non-subscriber information and mess aging group information in relation to one another.

According to an embodiment, the storing unit 350 may store the messagi ng service subscriber information or the messaging group. According to an embodimen t, the storing unit 350 may store a messaging service ID according to the joining of a no n-subscriber.

The controller 360 may control a request of invitation information relate d to the invitation to the messaging group, a creation of the invitation information, a tra nsmission of the invitation information, and at least one process related to the invitation to the messaging group.

The server 300 according to various embodiments of the present disclos ure may include an invitation information creating unit 320 configured to create invitati on information when invitation information is requested from an inviter terminal 100, a communication unit 310 configured to transmit the invitation information to the inviter terminal 100 and to transmit a join result of a non-subscriber for a messaging service t o the inviter terminal 100, a membership managing unit 330 configured to let a non-sub scriber join the messaging service when a join request including the invitation informati on and non-subscriber information is received from a non-subscriber terminal device 20 0, and a group managing unit 340 configured to add the non-subscriber to join a messag ing group when a request inviting the non-subscriber to the messaging group is receive d from the inviter terminal 100.

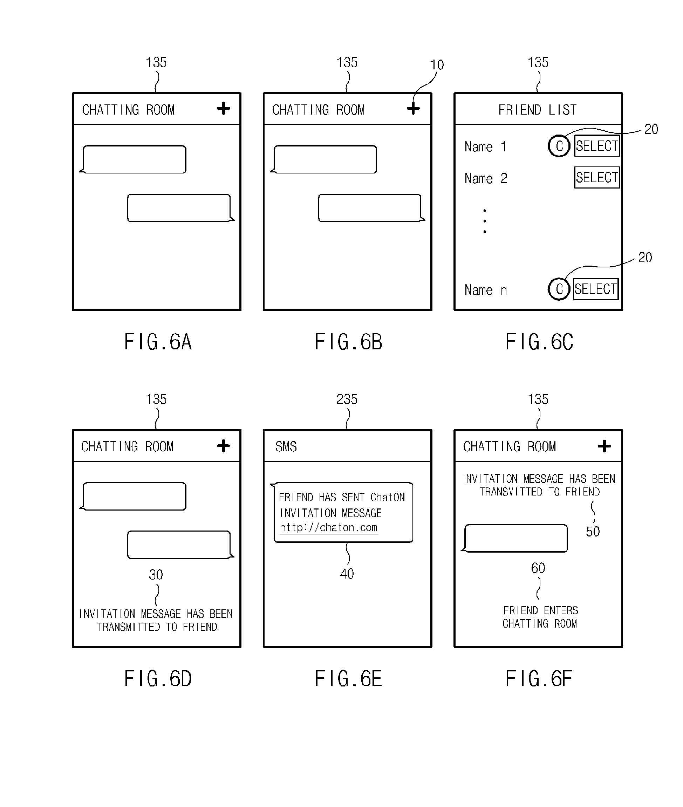

FIGS. 6A to 6F are views showing a display screen provided by an invit er terminal apparatus or a non-subscriber terminal apparatus according to various embo diments of the present disclosure.

Referring to FIGS. 6A, 6B, 6C, 6D and 6F, display screens 135 provided by an inviter terminal device 100 are illustrated. Referring to FIG. 6E, a display screen 235 provided by a non-subscriber terminal device 200 is illustrated.

FIG. 6A indicates a display screen 135 displaying contents (e.g., texts, p hotographs, etc.) transmitted/received within a messaging group (or chatting room) whi le a messaging application is executed. Referring to FIG. 6B, an icon 10 for adding a u ser may be displayed on the display screen 135.

When the icon for adding a user is selected, a friend list may be displaye d as shown in FIG. 6C. According to an embodiment, a name of a non-subscriber as w ell as a messaging service subscriber may be also included in the friend list. According to an embodiment, the messaging service subscriber may be displayed by an icon 20 so as to be distinguished from a non-subscriber as shown in FIG. 6C. The user may select at least one of the subscribers or the non-subscribers included in the friend list.

When the user selects at least one of the non-subscribers included in the list, the inviter terminal device 100 may transmit an invitation message to the selected n on-subscriber terminal device 200. When the invitation message is transmitted, an obje ct 30 indicating that the invitation message has been transmitted may be displayed as sh own in FIG. 6D.

Meanwhile, when receiving the invitation message, the non-subscriber t erminal device 200 may display the invitation message as shown in FIG. 6E. Referring to FIG. 6E, the invitation message may include an invitation phrase (e.g., "Your friend has sent a ChatON invitation message") and an application installation URL 40. The n on-subscriber may select the application installation URL 40 to install the application a nd then join the messaging service.

When the non-subscriber joins the messaging service, the non-subscriber may be automatically invited to the messaging group to which the inviter invites. Thus , an object 50 indicating that the non-subscriber has been invited to the messaging grou p may be displayed and an object 60 indicating that the non-subscriber has entered the c hatting room may be displayed as shown in FIG. 6F.

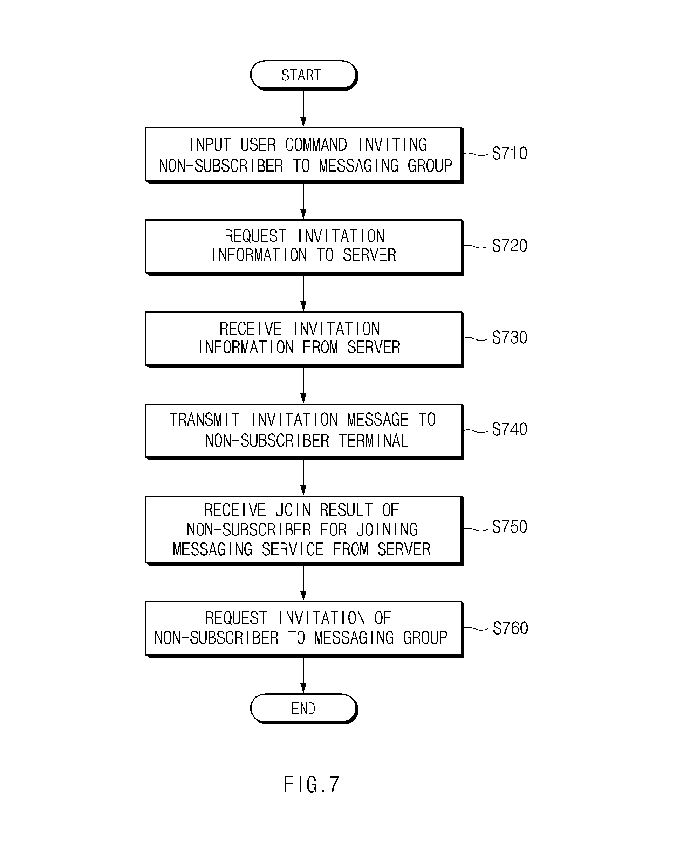

FIG. 7 is a flow chart showing a method of providing a messaging servic e in a server according to an embodiment of the present disclosure.

Referring to FIG. 7, a flow chart consisting of time-series processes proc essed by an inviter terminal device 100, as shown in FIG. 3, is illustrated. Therefore, al though being omitted below, any content related to the inviter terminal device shown in FIG. 3 may be applied to the flow chart shown in FIG. 7.

Referring FIG. 7, the inviter terminal device 100 may receive an input of a user command inviting a non-subscriber of the messaging service from a user thereof at operation S710. According to an embodiment, the inviter terminal device 100 may display a list including messaging service subscribers and non-subscribers. Alternativel y, the inviter terminal device 100 may display a list including only non-subscribers of t he messaging service in a specific messaging group (e.g., chatting room). In relation to this, the inviter terminal device 100 may provide at least one icon or menu item capabl e of outputting at least one of a messaging service subscriber list, a messaging service n on-subscriber list, and a mixed list (including the messaging service subscriber and the messaging service non-subscribers). The above-described icon or menu item may be o utputted from a specific messaging service execution screen (e.g.: a standby room scree n or the like according to an execution of the messaging service), a specific messaging group display screen (e.g.: a specific chatting room screen), or a standby screen (e.g.: a screen on which menus or icons provided according to unlocking of a lock screen or the like are disposed or an IDLE screen provided prior to entry into an execution of anothe r function). The user may select at least one of the non-subscribers included in the list.

The inviter terminal device 100 may transmit a request for invitation inf ormation to the server 300 at operation S720. According to an embodiment, the inviter terminal device 100 may transmit inviter information and non-subscriber information to gether when requesting the invitation information. For example, the inviter information may be an inviter's messaging service ID or MSISDN, and the non-subscriber informa tion may be MSISDN.

The inviter terminal device 100 may receive the invitation information fr om the server at operation S730. When the invitation information is received from the server 300, the inviter terminal device 100 may transmit an invitation message to the no n-subscriber terminal device 200 at operation S740. According to an embodiment, the i nvitation message may include invitation information and an application installation U RL. The inviter terminal device 100 may store the application installation URL in adva nce, or may receive the application installation URL together with the invitation inform ation from the server 300. According to an embodiment, the inviter terminal device 10 0 may transmit the invitation message by using a messaging service different from the messaging service according to an embodiment of the present disclosure. For example, the inviter terminal device 100 may transmit an invitation message to the non-subscrib er terminal device 200 by using a SMS. Alternatively, the inviter terminal device 100 may transmit the invitation message to the non-subscriber terminal device 200 (or an e-mail server device which the non-subscriber terminal device uses) by using an e-mail.

The inviter terminal device 100 may receive a result of the non-subscrib er joining the messaging service from the server at operation S750. When the join resul t of the non-subscriber for the messaging service is received from the server 300, the in viter terminal device 100 may transmit a request for an invitation of the non-subscriber to the messaging group to the server 300 at operation S760. According to an embodim ent, the inviter terminal device 100 may request the invitation of the non-subscriber by using the messaging group information and a messaging service ID or MSISDN of the non-subscriber.

According to various embodiments of the present disclosure, a method o f providing, by a terminal device, a messaging service may include receiving an input o f a user command inviting a non-subscriber of a messaging service to join a messaging group at operation S710, requesting invitation information to a server 300 at operation S720, and when invitation information is received from the server 300 at operation S73 0, transmitting an invitation message including the invitation information and an applic ation installation URL to a non-subscriber terminal device 200 at operation S740, and when a join result of the non-subscriber for the messaging service is received from the s erver 300 at operation S750, transmitting a request for an invitation of the non-subscrib er to the messaging group at operation S760.

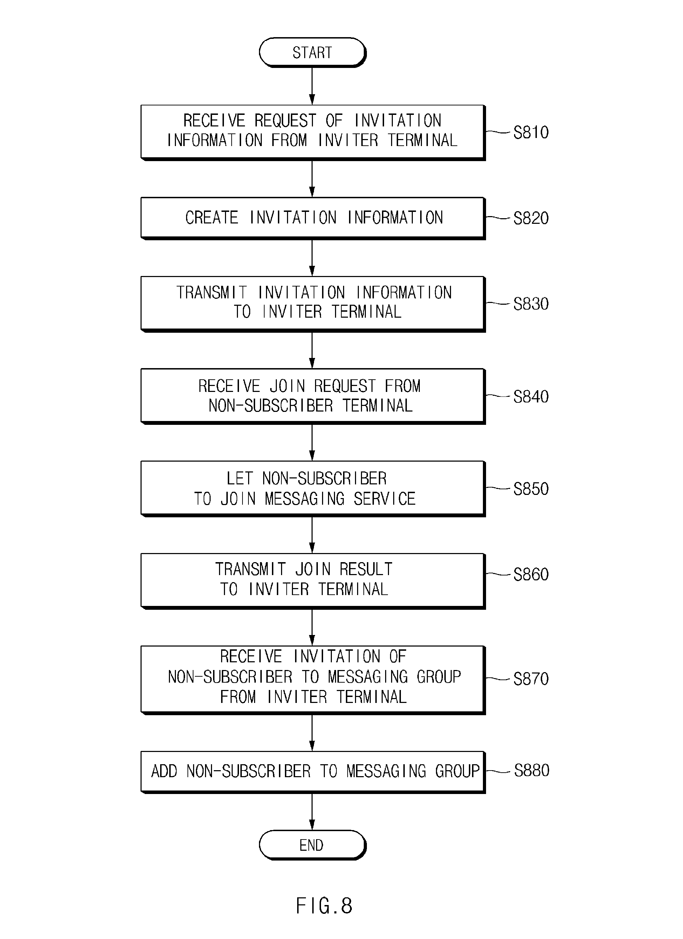

FIG. 8 is a flow chart showing a method of providing a messaging servic e in a server according to an embodiment of the present disclosure.

Referring to FIG. 8, a flow chart consisting of time-series processes proc essed by a server, as shown in FIG. 5, is illustrated. Therefore, although being omitted below, any content related to the server shown in FIG. 5 may be applied to the flow cha rt shown in FIG. 8.

Referring to FIG. 8, the server 300 may receive a request of invitation in formation from the inviter terminal device 100 at operation S810. When the invitation i nformation is requested from the inviter terminal device 100, the server 300 may create the invitation information at operation S820. The invitation information may include in herent identification information by which it may be identified that an inviter has invite d a non-subscriber to the messaging group. Whenever the invitation information is req uested, the server 300 may create inherent invitation information. According to an emb odiment, the server 300 may store the invitation information in relation to the subscribe r information and non-subscriber information received from the inviter terminal device 100. According to an embodiment, the server 300 may store invitation information, su bscriber information, non-subscriber information and messaging group information in r elation to one another.

When the invitation information is created, the server 300 may transmit t he created invitation information to the inviter terminal device 100 at operation S830. According to an embodiment, the server 300 may transmit an application installation U RL together with the invitation information.

The server 300 may receive a join request from the non-subscriber termi nal device 200 at operation S840. When the join request is received from the non-subs criber terminal device 200, the server 300 may let the non-subscriber join the messagin g group at operation S850. According to an embodiment, when the non-subscriber join s the messaging service, the server 300 may store the messaging service ID of the non-s ubscriber.

When the non-subscriber joins the messaging service, the server 300 ma y transmit the join result to the inviter terminal device 100 at operation S860. Accordin g to an embodiment, the server 300 may identify the inviter by using the invitation info rmation received together with the join request from the non-subscriber terminal device 200, and may transmit the join result to the identified inviter. According to an embodi ment, when transmitting the join result, the server 300 may transmit the messaging serv ice ID of the non-subscriber together.

When a request inviting a non-subscriber to the messaging group is recei ved from the inviter terminal device 100 at operation S870, the server 300 may add the non-subscriber to the messaging group at operation S880.

The above embodiment describes that when a non-subscriber joins the m essaging service, the server 300 transmits a join result to the inviter terminal device 100 . However, according to an embodiment, in a case where the server 300 stores the invit ation information, the subscriber information, the non-subscriber information and the m essaging group information in relation to one another, the server 300 may not transmit t he join result to the inviter terminal device 100. According to an embodiment, in a case where the server 300 stores the invitation information, the subscriber information, the non-subscriber information and the messaging group information in relation to one anot her, when a non-subscriber joins the messaging service, the server 300 may add the non -subscriber to the messaging group using the invitation information, the subscriber info rmation, the non-subscriber information and the messaging group information.

A method of providing, by a server, a messaging service according to va rious embodiments of the present disclosure may include creating invitation informatio n at operation S820 when the invitation information is requested from an inviter termin al 100 at operation S810, transmitting the invitation information to the inviter terminal 100 at operation S830, an operation of, when a join request including the invitation info rmation and non-subscriber information is received from a non-subscriber terminal devi ce 200 at operation S840, letting the non-subscriber join the messaging service at opera tion S850, transmitting the join result to the inviter terminal 100 at operation S860, and an operation of, when a request inviting the non-subscriber to the messaging group is re ceived from the inviter terminal 100 at operation S870, adding the non-subscriber to the messaging group at operation S880.

The above-described method of providing, by an inviter terminal device 100 or a server 300, the messaging service may be implemented in programs that may b e executed on the terminal device 100 or the server 300. These programs may be stored and used in various types of recording mediums.

In particular, program codes for performing the above-described method s may be stored in various types of non-volatile recording mediums such as a flash me mory, a Read Only Memory (ROM), an Erasable and Programmable ROM (EPROM), an Electrically Erasable and Programmable ROM (EEPROM), a hard disk, a removable disk, a memory card, an USB memory, and a CD-ROM.

According to various embodiments of the present disclosure, it is possibl e to induce a service join of users who do not join a messaging service and to extend th e messaging service.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or m ore programs (software modules), the one or more programs comprising instructions, w hich when executed by one or more processors in an electronic device, cause the electro nic device to perform a method of the present disclosure.

Any such software may be stored in the form of volatile or non-volatile s torage such as, for example, a storage device like a Read Only Memory (ROM), whethe r erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciate d that the storage devices and storage media are various embodiments of non-transitory machine-readable storage that are suitable for storing a program or programs comprisin g instructions that, when executed, implement various embodiments of the present discl osure. Accordingly, various embodiments provide a program comprising code for impl ementing apparatus or a method as claimed in any one of the claims of this specificatio n and a non-transitory machine-readable storage storing such a program.

While the present disclosure has been shown and described with referen ce to various embodiments thereof, it will be understood by those skilled in the art that various changes in form and details may be made therein without departing from the sp irit and scope of the present disclosure as defined by the appended claims and their equi valents.

## Claims

1. A terminal device comprising:
an input unit(110) configured to receive an input of a user command inviting a non-subscriber of a messaging service to join a messaging group; and
a communication unit(120) configured to transmit a request for invitation information to a server, when the invitation information is received from the server, to transmit an invitation message including the invitation information and an application installation Uniform Resource Locator (URL) to a non-subscriber terminal, and when a join result of the non-subscriber joining the messaging service is received from the server, to transmit a request for an invitation of the non-subscriber to the messaging group.

2. The terminal device according to claim 1, wherein the communication unit is further configured to transmit the invitation message by using at least one of a Short Message Service (SMS) or an E-mail.

3. The terminal device according to claim 1 or claim 2, wherein the communication unit is further configured to transmit inviter information and non-subscriber information together with the invitation information when transmitting the request for the invitation information.

4. The terminal device according to claims 1 to 3, further comprising a display configured to display a list including non-subscribers of the messaging service,
wherein the input unit is further configured to receive an input of a user command selecting at least one of the non-subscribers included in the list.

5. A server comprising:
an invitation information creating unit(320) configured to create invitation information when invitation information is requested from an inviter terminal;
a communication unit(310) configured to transmit the created invitation information to the inviter terminal and to transmit a join result of a non-subscriber joining a messaging service to the inviter terminal;
a membership managing unit(330) configured to, when a join request including the invitation information and non-subscriber information is received from a non-subscriber terminal, let the non-subscriber join the messaging service; and
a group managing unit(340) configured to, when a request inviting the non-subscriber to join a messaging group is received from the inviter terminal, add the non-subscriber to the messaging group.

6. The server according to claim 5, further comprising a storing unit(350) configured to store the invitation information, inviter information and the non-subscriber information in relation to one another.

7. The server according to claims 5 to 6, wherein the group managing unit is further configured to identify the inviter terminal by using the invitation information received from the non-subscriber terminal, and the communication unit is further configured to transmit the join result to the identified inviter terminal.

8. A method of providing, by a terminal device, a messaging service, the method comprising:
receiving, by the terminal device, an input of a user command inviting a non-subscriber of the messaging service to join a messaging group;
transmitting a request for invitation information to a server;
when the invitation information is received from the server, transmitting an invitation message including the invitation information and an application installation Uniform Resource Locator (URL) to a non-subscriber terminal; and
when a join result of the non-subscriber joining the messaging service is received from the server, transmitting a request for an invitation of the non-subscriber to the messaging group.

9. The method according to claim 8, wherein the transmitting of the invitation message is conducted by using a Short Message Service (SMS).

10. The method according to claim 8 or claim 9, wherein the transmitting of the request for the invitation information further includes transmitting inviter information and non-subscriber information together with the invitation information.

11. The method according to claims 8 to 10, wherein the receiving of the input of the user command further includes:
displaying a list including subscribers and non-subscribers; and
allowing a user to select at least one of the non-subscribers included in the list.

12. A method of providing, by a server, a messaging service, the method comprising:
creating invitation information when invitation information is requested from an inviter terminal;
transmitting the created invitation information to the inviter terminal;
when a join request including the invitation information and non-subscriber information is received from a non-subscriber terminal, letting the non-subscriber join the messaging service;
transmitting a join result of the non-subscriber joining the messaging service to the inviter terminal; and
when a request inviting the non-subscriber to join a messaging group is received from the inviter terminal, adding the non-subscriber to the messaging group.

13. The method according to claim 12, further comprising storing the invitation information, inviter information and the non-subscriber information in relation to one another.

14. The method according to claim 12 or claim 13, wherein the transmitting of the join result to the inviter terminal further includes:
identifying the inviter terminal by using the invitation information and the non-subscriber information received from the non-subscriber terminal; and
transmitting the join result to the identified inviter terminal.

15. A method of providing, by a messaging system, a messaging service, the method comprising:
when a user command by which an inviter terminal invites a non-subscriber of the messaging service to join a messaging group is inputted, transmitting a request for invitation information to a server;
creating, by the server, invitation information and transmitting the created invitation information to the inviter terminal;
transmitting, by the inviter terminal, an invitation message including the invitation information and an application installation Uniform Resource Locator (URL) to a non-subscriber terminal;
transmitting, by the non-subscriber terminal, a join request including the invitation information and non-subscriber information through the URL;
letting, by the server, the non-subscriber join the messaging service and transmitting a join result to the inviter terminal;
requesting, by the inviter terminal, an invitation of the non-subscriber to the messaging group; and
adding, by the server, the non-subscriber to the messaging group.
